Europäisches Patentamt

European Patent Office

Office européen des brevets

(19)

(11) Publication number: **0 416 123 A1**

## EUROPEAN PATENT APPLICATION
### published in accordance with Art. 158(3) EPC

(12)

(21) Application number: 90904653.4

(22) Date of filing: 16.03.90

(86) International application number:
PCT/JP90/00361

(87) International publication number:
WO 90/11166 (04.10.90 90/23)

(51) Int. Cl.⁵: **B25J 9/16**, G05B 19/18,
G05B 19/42, G05D 3/12

(30) Priority: 20.03.89 JP 69091/89

(43) Date of publication of application:
13.03.91 Bulletin 91/11

(84) Designated Contracting States:
DE FR GB IT

(71) Applicant: FANUC LTD.
3580, Shibokusa Aza-Komanba, Oshino-mura
Minamitsuru-gun, Yamanashi 401-05(JP)

(72) Inventor: KAWAMURA, Hideaki
1375-5, Naraharamachi
Hachioji-shi Tokyo 193(JP)
Inventor: ISHIKAWA, Haruyuki
25, Daikyocho Shinjuku-ku
Tokyo 160(JP)

(74) Representative: Brunner, Michael John et al
GILL JENNINGS & EVERY 53-64 Chancery
Lane
London WC2A 1HN(GB)

(54) **MANUAL INTERVENTION METHOD FOR INDUSTRIAL ROBOT.**

(57) A manual intervention method for adjusting the position of an industrial robot by manual operation while the industrial robot is automatically operated. The robot is shifted to the mode where manual transfer is possible by a service code (52) to adjust the position of the work of the industrial robot by manual transfer (S3,S4). A signal of fulfillment is given from the outside after the correction is finished (S5), and the adjustment value obtained by the manual adjusting operation is stored as a correction value in a memory (S6). This value can be used as an adjusting value for the next run. Since an adjustment is unnecessary or a minute amount of adjustment suffices for the assembly of the next work, the efficiency of assembly is enhanced.

FIG. 1

EP 0 416 123 A1

## MANUAL INTERVENTION SYSTEM FOR AN INDUSTRIAL ROBOT

Technical Field

The present invention relates to a manual intervention system for an industrial robot, and more particularly, to a manual intervention system permitting a fine adjustment of a workpiece position during an automatic operation of an industrial robot.

Background Art

Conventionally, when executing assembly work by an industrial robot, the position of a workpiece must be adjusted due to a low positioning accuracy of the line or variations of the workpieces. Accordingly, the position of the workpiece is manually adjusted after suspending the program, or is automatically adjusted by using a visual sensor.

According to the method in which the program is suspended, however, the interlocking with peripheral equipment is complex, and operations such as a change of mode and restarting of the program become complicated.

Further, according to the method in which the visual sensor is used, the cost of the sensor itself is high, and specific restrictions are imposed on the shape and material of the workpiece and the illumination conditions. Where the brightness of the environment changes depending on the time zone or the weather, for example, it is difficult to use the sensor, and it is hard to identify an accurate position from a point on or edge of a curved surface.

Disclosure of the Invention

The present invention has been created in consideration of these circumstances, and an object thereof is to provide a manual intervention system for an industrial robot, by which a workpiece position can be easily adjusted during an automatic operation of the industrial robot.

To solve the above problem, according to the present invention, there is provided a manual intervention system for an industrial robot, able to adjust the position of the robot by a manual operation during an automatic operation of the industrial robot, in which the manual intervention system for an industrial robot is characterized in that a manual feed state is established by using a service code, the position of a workpiece for the industrial robot is adjusted by the manual feed, a completion signal is given from outside after the correction is completed, an adjustment value obtained by the manual adjustment operation is stored as a correction value, and the next operation program is entered.

When the service code for manual intervention is input, the robot control apparatus prepares for a manual intervention. In this state, the operator manually adjusts the actual position of the workpiece, and when the adjustment is completed, a termination signal is input to the robot control apparatus. The value of this adjustment is stored in a memory, and thus can be used as a correction value for the next cycle of operation.

Brief Description of the Drawings

Fig. 1 is a flow chart showing the processes used in a manual intervention system for an industrial robot according to the present invention;

Fig. 2 is a diagram showing an example of an automobile assembly line according to an embodiment of the present invention;

Fig. 3 is a block diagram of the hardware of a robot control apparatus; and

Fig. 4 is a diagram showing an example of a program by which the present invention is carried out.

Best Mode of Carrying Out the Invention

One embodiment of the present invention will now be described with reference to the drawings.

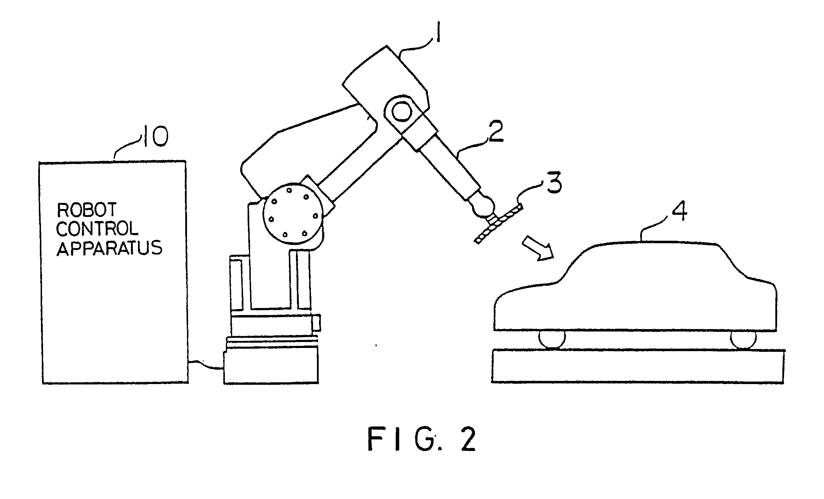

Figure 2 shows an example of an automobile assembly line according to the embodiment of the present invention, wherein a robot 1 is controlled by a robot control apparatus 10, and a front window of an automobile 4 is held on the distal end of an arm 2 of the robot 1 and is attached to the automobile 4. In general, the positioning accuracy for automobiles in automobile assembly lines is not high, and thus the operator must adjust a programmed position of a workpiece to the actual position of the automobile. The present invention is intended to allow such a workpiece positioning to be easily carried out.

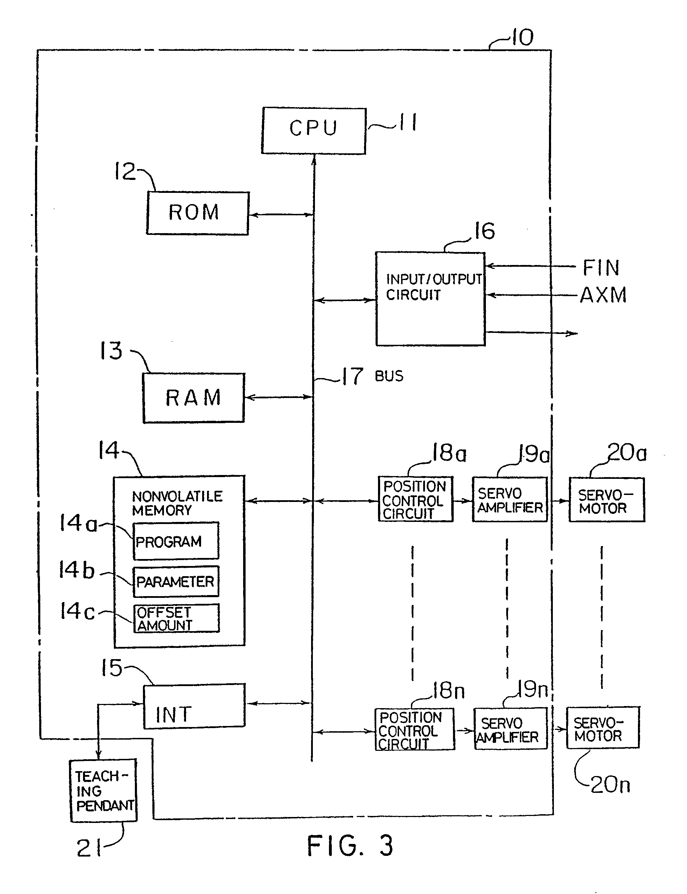

Figure 3 is a block diagram of the hardware of the robot control apparatus. In accordance with a system program stored in a ROM 12, a processor 11 controls the movement of the robot 1 through a program 14a. A RAM 13 is used to temporarily store various data, and a program 14a determining the operation of the robot, a parameter 14b, and an offset amount 14c for correcting the position of the robot, etc., are stored in a nonvolatile memory 14. The nonvolatile memory 14 is a CMOS and is provided with a back-up power source, such as a battery, so that the stored items can be maintained even when the power supply to the robot control apparatus 10 is cut off.

A teaching pendant 21 is connected to a serial interface 15, and the operator gives instruction to the robot by using this teaching pendant 21.

An input/output circuit 16 receives input signals from or delivers output signals to a control panel or machine control circuit provided on the user side. The Figure shows a manual intervention termination signal FIN and an axis move command signal AXM for controlling the manual operation of the robot 1, which are particularly essential.

When receiving a position command from the processor 11, position control circuits 18a to 18n send speed commands to servo amplifiers 19a to 19n, which drive servomotors 20a to 20n. These elements are provided for each of five or six axes, depending on the robot, and the various axes of the robot 1 are driven by these servomotors 20a to 20n.

The processor 11 and other elements, such as the ROM 12, are interconnected by a bus 17, and data is transferred therebetween through the bus 17. Although only one processor 11 is described, a plurality of processors may be used to thereby constitute a multiprocessor system.

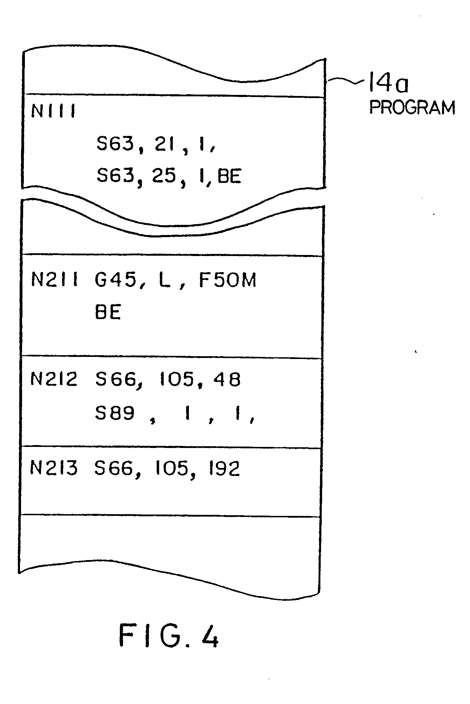

Figure 4 shows an example of a program by which the present invention is carried out. This is an example of a program for adjusting the position of the front window of the automobile shown in Fig. 2.

In "N111", the first "S63" is a service code which selects work coordinates 21 and an offset data group 1. This coordinate system is defined by the user. When a command is given for a manual operation based on the teaching in this coordinate system, the robot control apparatus uses this command to determine the movements of individual joints, and controls the arm of the robot so that the arm is moved in accordance with the command.

The second "S63" selects the work coordinates 1 and the offset data group 1 to be used. Two coordinate systems are used in this case. BE indicates a block end.

Then, in "N211", "G45" sends a command for an offset correction. When an adjustment operation is performed by a manual intervention, the adjustment value is stored as an offset value for execution in the next cycle of operation. "L" and "F50M" indicate a rectilinear command and a speed command, respectively.

In "N212", "S66" is a service code which reduces the acceleration/deceleration time constant, "S89" establishes a manual adjustment feed mode such that the robot can be controlled in accordance with an external manual command, and an adjustment operation is performed. Thus, when "S89, 1, 1" is executed, the control is switched from a normal mode to a manual adjustment mode, whereby a manual adjustment feed is allowed. The first figure "1", which follows "S89", specifies a selection of a manual operation termination signal. Namely, this service code indicates that a first termination signal is valid. The final figure designates the offset group number. Accordingly, the manual adjustment value is stored as a correction value in the offset group 1, and when the termination signal FIN is output, the automatic operation mode is restored and the remaining part of the program is executed.

In the manual adjustment feed mode, the robot can be manually operated by changing the level of the external axis move command signal AXM. Possible operations include an operation along straight lines in the directions of the X- and Y-axes of a tool coordinate system assigned by the user, and an operation for a rotation around an axis parallel to the Z-axis, while the distal end point of a tool is kept at a fixed position.

The correspondence between the operating directions and signal used as operation commands, the speeds of these operations (for a rectilinear operation), and individual speeds (for a rotating operation) can be assigned by using parameters. If the termination signal FIN is output during the operation, the operation is immediately stopped, and the automatic operation mode is restored, whereupon the remaining part of the program is executed.

When the operation mode returns from the manual adjustment feed mode to the automatic operation mode at the leading edge of the termination signal FIN, the robot automatically calculates a value for the positioning in the manual adjustment feed mode as correction data "G45", and stores that data in an assigned offset data group. Thereafter, if this offset data group is selected, the same amount as used in the operation in the manual adjustment feed mode is corrected and retrieved at the point where "G45" is output as an instruction.

Whether only the value for the present correction is stored as the correction data to be stored in the offset data, or whether the value obtained by adding the value for the present adjustment to the previously stored data is to be stored can be assigned by using a parameter. Normally, the latter case is selected, "G45" is output as an instruction to the point instructed by "S89, 1" (where 1 designates a termination signal), and the position at this point is regarded as a position which reflects the previously fetched data. In this arrangement, the offset data of the group used for the first cycle must be cleared.

In "N213", "S66" is a command which restores the acceleration/deceleration time constant. The acceleration/deceleration time constant is changed at the time of a manual intervention, because the speed for the manual operation is so low that the acceleration/deceleration time constant is not required.

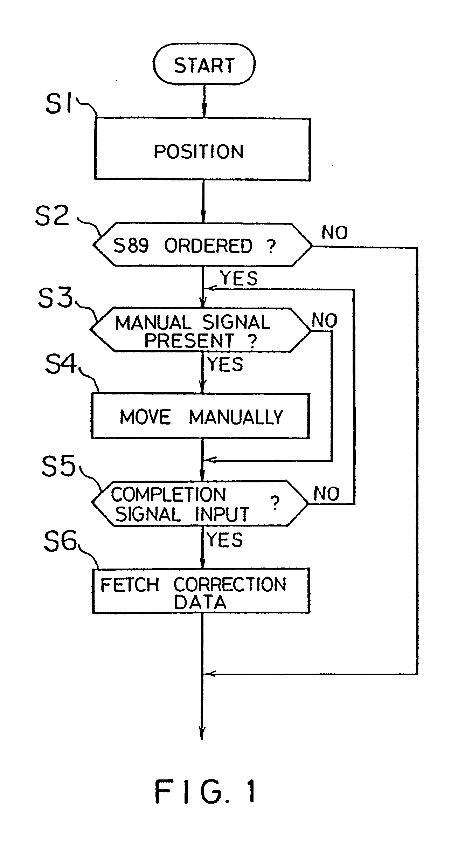

Figure 1 is a flowchart showing the processes used in a manual intervention system for an industrial robot according to the present invention. In this drawing, the figure which follows S designates the step number.

In Step S1, a normal positioning is effected.

In Step S2, whether "S89" has been output is determined, and if output, the program proceeds to S3.

In Step S3, it is determined whether or not the external manual axis move command signal AXM is present. If present, the program proceeds to S4, and if not, the program proceeds to S5.

In Step S4, a manual intervention is made, namely, the axis move command signal AXM is input, and thus a required movement is carried out.

In Step S5, it is determined whether or not the manual intervention completion signal has been input. If input, the program proceeds to S6, and if not, the program returns to S3, whereupon the operation for the manual intervention is continued.

In Step S6, the manual intervention is completed, and the value for the adjustment is fetched into the assigned offset group.

When the manual intervention is completed, the normal positioning is continued, and thus the position of the workpiece can be easily adjusted.

Although the assembling of the front window in the automobile assembly line has been described by way of an example herein, the present invention is not limited to such an example, and may be also applied to the adjustment of the positions of workpieces in other assembly lines.

According to the present invention, as described above, a specific service code is used to establish a manual intervention state such that the axis can be manually moved to adjust the position of the workpiece, so that the operator can easily adjust the position of the workpiece.

Since the adjustment value can be stored as offset data, moreover, no adjustment is required or only a fine amount of adjustment is needed when assembling another workpiece, and thus the assembling efficiency is improved.

**Claims**

1.  A manual intervention system for an industrial robot, able to adjust the position of the robot by a manual operation during an automatic operation of the industrial robot, the manual intervention system being characterized in that:

    a manual feed state is established by using a service code;

    a position of a workpiece at the industrial robot is adjusted by a manual feed;

    a completion signal is given from outside after the adjustment is completed;

    an adjustment value obtained by said manual adjustment operation is stored as a correction value; and

    the next operation program is entered.

2.  A manual intervention system for an industrial robot according to claim 1, wherein a manual adjustment value for the next cycle is added to said correction value to provide another correction value.

3.  A manual intervention system for an industrial robot according to claim 1, wherein said manual adjustment is made by a user-defined coordinate system.

4.  A manual intervention system for an industrial robot acoording to claim 1, wherein said manual intervention is carried out during the assembly of a window for an automobile in an automobile assembly line.

F I G. 1

FIG. 2

FIG. 3

~ 14a
PROGRAM

N111

    S63, 21, 1,

    S63, 25, 1, BE

N211  G45, L, F50M

    BE

N212  S66, 105, 48

    S89, 1, 1,

N213  S66, 105, 192

FIG. 4

# INTERNATIONAL SEARCH REPORT

International Application No PCT/JP90/00361

## I. CLASSIFICATION OF SUBJECT MATTER (if several classification symbols apply, indicate all) [6]

According to International Patent Classification (IPC) or to both National Classification and IPC

Int. Cl$^5$　　B25J9/16, G05B19/18, 19/42, G05D3/12

## II. FIELDS SEARCHED

| Minimum Documentation Searched [7] | |
|---|---|
| Classification System | Classification Symbols |
| IPC | B25J9/10 - 9/22, G05B19/18, 19/42, G05D3/12 |

Documentation Searched other than Minimum Documentation
to the Extent that such Documents are included in the Fields Searched [8]

| | |
|---|---|
| Jitsuyo Shinan Koho | 1926 - 1989 |
| Kokai Jitsuyo Shinan Koho | 1971 - 1989 |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| Y | JP, A, 61-285506 (Tokico Ltd.), 16 December 1986 (16. 12. 86), Lines 5 to 19, lower left column; page 1 (Family: none) | 1 - 3 |
| Y | JP, A, 61-233806 (Mitsubishi Electric Corp.), 18 October 1986 (18. 10. 86), Lines 5 to 12, lower left column, page 1; line 15, upper left column, column 3 to line 20, upper right column (Family: none) | 1 - 3 |
| Y | JP, A, 61-231604 (Hitachi, Ltd.), 15 October 1986 (15. 10. 86), Lines 4 to 13, lower left column; page 1 (Family: none) | 1 - 3 |
| Y | JP, A, 59-189415 (Hitachi, Ltd.), 27 October 1984 (27. 10. 84), & EP, A, 123,214 | 1 - 3 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| June 4, 1990 (04. 06. 90) | June 18, 1990 (18. 06. 90) |
| International Searching Authority | Signature of Authorized Officer |
| Japanese Patent Office | |

Form PCT/ISA/210 (second sheet) (January 1985)

International Application No. PCT/JP90/00361

| FURTHER INFORMATION CONTINUED FROM THE SECOND SHEET | | |
|---|---|---|
| Y | JP, A, 58-192107 (Okuma Machinery Works, Ltd.), 9 November 1983 (09. 11. 83), Lines 4 to 11, lower left column; page 1 (Family: none) | 1 - 3 |
| Y | JP, A, 58-155189 (Shin Meiwa Industry Co., Ltd.), 14 September 1983 (14. 09. 83), Lines 5 to 15, upper left column; page 1 (Family: none) | 1 - 3 |
| Y | JP, U, 58-84882 (NEC Corp.), 8 June 1983 (08. 06. 83), | 1 - 3 |

V.☐ OBSERVATIONS WHERE CERTAIN CLAIMS WERE FOUND UNSEARCHABLE ¹

This international search report has not been established in respect of certain claims under Article 17(2) (a) for the following reasons:

1.☐ Claim numbers        , because they relate to subject matter not required to be searched by this Authority, namely:

2.☐ Claim numbers        , because they relate to parts of the international application that do not comply with the prescribed requirements to such an extent that no meaningful international search can be carried out, specifically:

3.☐ Claim numbers .        , because they are dependent claims and are not drafted in accordance with the second and third sentences of PCT Rule 6.4(a).

VI.☐ OBSERVATIONS WHERE UNITY OF INVENTION IS LACKING ²

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)

International Application No. PCT/JP90/00361

| | FURTHER INFORMATION CONTINUED FROM THE SECOND SHEET | |
|---|---|---|
| | Lines 2 to 22, lower left column; page 1 (Family: none) | |
| A | JP, A, 58-87603 (Tokico Ltd.), 25 May 1983 (25. 05. 83), Lines 5 to 15, lower left column; page 1 (Family: none) | 1 - 3 |
| A | JP, A, 59-116810 (Hitachi, Ltd.), 5 July 1984 (05. 07. 84), Lines 4 to 12, lower left column; page 1 (Family: none) | 1 - 3 |

**V.☐ OBSERVATIONS WHERE CERTAIN CLAIMS WERE FOUND UNSEARCHABLE [1]**

This international search report has not been established in respect of certain claims under Article 17(2) (a) for the following reasons:

1.☐ Claim numbers . . . . , because they relate to subject matter not required to be searched by this Authority, namely.

2.☐ Claim numbers .. . ., because they relate to parts of the international application that do not comply with the prescribed requirements to such an extent that no meaningful international search can be carried out, specifically:

3.☐ Claim numbers ... ...., because they are dependent claims and are not drafted in accordance with the second and third sentences of PCT Rule 6.4(a).

**VI.☐ OBSERVATIONS WHERE UNITY OF INVENTION IS LACKING [2]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)

| FURTHER INFORMATION CONTINUED FROM THE SECOND SHEET | | |
|---|---|---|
| A | JP, A, 52-106563 (Kawasaki Heavy Industries, Ltd.), 7 September 1977 (07. 09. 77), & DE, A, 2,709,335 & FR, A, 2,342,826 & US, A, 4,140,953 | 1 - 3 |

**V.☐ OBSERVATIONS WHERE CERTAIN CLAIMS WERE FOUND UNSEARCHABLE** [1]

This international search report has not been established in respect of certain claims under Article 17(2) (a) for the following reasons:

1.☐ Claim numbers . . . . , because they relate to subject matter not required to be searched by this Authority, namely:

2.☐ Claim numbers . . . , because they relate to parts of the international application that do not comply with the prescribed requirements to such an extent that no meaningful international search can be carried out, specifically:

3.☐ Claim numbers . . . . , because they are dependent claims and are not drafted in accordance with the second and third sentences of PCT Rule 6.4(a).

**VI.☐ OBSERVATIONS WHERE UNITY OF INVENTION IS LACKING** [2]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)